# EUROPÄISCHE PATENTSCHRIFT

(11) **EP 0 887 240 B1**
(45) Veröffentlichungstag und Bekanntmachung des Hinweises auf die Patenterteilung: **12.11.2003**
(21) Anmeldenummer: 98107240.8
(22) Anmeldetag: 21.04.1998
(51) Int. Cl.: B60R 25/02

(54) **Verriegelungsvorrichtung für ein Kraftfahrzeug**
Locking device for a motor vehicle
Dispositif de verrouillage pour véhicule automobile

(30) Priorität: 07.05.1997 DE 19719343
(43) Veröffentlichungstag der Anmeldung: 30.12.1998
(73) Patentinhaber: VALEO GmbH & Co Schliesssysteme KG, 42579 Heiligenhaus (DE)
(72) Erfinder: Erices, Bernardo, 51429 Bergisch Gladbach (DE); Lieb, Kurt, 63500 Seligenstadt (DE)
(74) Vertreter: Podszus, Burghart, Dipl.-Phys., Dipl.-Wirtsch.-Ing.

(56) Entgegenhaltungen:
- DE-C- 4 436 091
- GB-A- 462 093

## Beschreibung

Die Erfindung betrifft eine Verriegelungsvorrichtung für ein Kraftfahrzeug mit mindestens einem zur Lenkwelle des Fahrzeuges innerhalb eines Gehäuses von einer Ent- in eine Verriegelungsstellung hin verschiebbar angeordneten, zahnförmig ausgebildeten Sperrelement, welches in seiner Verriegelungsstellung in die durch benachbarte Zähne gebildete Ausnehmung eines am äußeren Umfang der Lenkwelle angeordneten Zahnkranzes eingreift.

Es ist bekannt, Kraftfahrzeuge gegen Diebstahl dadurch zu sichern, daß ein als Sperrelement verwendeter Bolzen senkrecht in eine Ausnehmung der Lenkwelle der Lenksäule eingreift und diese blockiert. Die Betätigung des Sperrbolzens erfolgt dabei üblicherweise über ein mit dem Zündschloß verbundenes Gestänge oder einen Elektromotor.

Nachteilig ist bei derartigen bekannten Verriegelungsvorrichtungen unter anderem, daß ein Eingreifen des Sperrbolzens in die Ausnehmung der Lenkwelle nur bei einer genau vorgegebenen Stellung der Lenkwelle erfolgen kann, so daß in aller Regel zusätzlich zur Betätigung der Verriegelungsvorrichtung (z.B. durch den Abzug des Zündschlüssels) mit mehr oder weniger großem Kraftaufwand auch noch die Lenkwelle verdreht werden muß. Außerdem weisen die bekannten Verriegelungsvorrichtungen den Nachteil auf, daß in der Verriegelungsstellung des Sperrbolzens bei einer gewaltsamen Drehung der Lenkwelle relativ hohe Scherkräfte auftreten, die zu einem Abscheren des Sperrbolzens führen können.

Aus der FR 2 714 344 ist ein zahnförmig ausgebildetes Sperrelement bekannt, welches in seiner Verriegelungsstellung in die durch benachbarte Zähne gebildete Ausnehmungen eines am äußeren Umfang der Lenkwelle angeordneten Zahnkranzes eingreift.

Auch bei dieser Verriegelungsvorrichtung ergibt sich der Nachteil, daß zusätzlich zur Betätigung der Verriegelungsvorrichtung die Lenkwelle verdreht werden muß, weil das Sperrelement häufig nicht genau zwischen zwei Zähne des Zahnkranzes eingeschoben wird, sondern gegen die Flanke eines der beiden benachbarten Zähne stößt.

**Aus der US 4,576,024 und der DE 38 41 999 A1 sind Verriegelungsvorrichtungen bekannt, bei denen das Sperrelement in der Verriegelungsstellung in nutenförmige Ausnehmungen, die durch mit senkrechten Zahnflanken versehene Zähne eines Zahnkranzes gebildet werden, eingreift.**

**Auch bei diesen bekannten Vorrichtungen müssen unter Umständen zusätzlich zur Betätigung der Verriegelungsvorrichtungen die Lenkwellen verdreht werden.**

Aus der DE 39 37 800 C1 ist eine Verriegelungsvorrichtung bekannt, dessen einteiliges Sperrelement zwei voneinander beabstandete Sperrnasen umfaßt. Die Sperrnasen sind um etwas mehr als eine Zahnbreite des jeweiligen ebenfalls mit senkrechten Zahnflanken versehenen Zahnes eines an der Lenkwelle angeordneten Zahnkranzes versetzt, so daß zwischen den Sperrnasen eine etwa einen Zahn breite Gasse entsteht, wobei der mit dem Zahnkranz in Eingriff kommende, mit den Sperrnasen versehene Bereich des Sperrelementes maßlich geringfügig schmaler als die zwischen zwei Zähnen vorhandenen Nuten des Zahnkranzes ausgebildet ist.

Das Sperrelement dieser bekannten Verriegelungsvorrichtung ist in seiner Verriegelungsstellung um eine zur Lenkwellenachse parallele Drehachse schwenkbar angeordnet, so daß beim Auftreffen der einen Sperrnase auf die breite Stirnseite eines der Zähne die jeweils andere Sperrnase in die durch diesen und den benachbarten Zahn gebildete Ausnehmung teilweise hineingedrückt wird. Soll allerdings die gegen die Stirnseite des Zahnes drückende Sperrnase ebenfalls in die zwischen den Zähnen liegende Ausnehmung gelangen, so muß auch in diesem Fall zusätzlich zur Betätigung der Verriegelungsvorrichtung die Lenkwelle des Fahrzeuges verdreht werden.

**Schließlich ist aus der DE 44 36 091 C1 eine Verriegelungsvorrichtung für ein Kraftfahrzeug bekannt, die mindestens ein zur Lenkwelle des Fahrzeuges von einer Ent- in eine Verriegelungsstellung hin verschiebbar angeordnetes, zahnförmig ausgebildetes Sperrelement umfaßt, welches in seiner Verriegelungsstellung in die durch benachbarte Zähne gebildete Ausnehmung eines am äußeren Umfang der Lenkwelle angeordneten Zahnkranzes eingreift. Damit sich bei der Zuordnung des Sperrelementes zu der Radialverzahnung des Zahnkranzes eindeutige Verhältnisse ergeben, ist einerseits der dem Zahnkranz zugewandte Endbereich des Sperrelementes abgerundet und andererseits ist das Sperrelement bei seiner Verschiebung in die Verriegelungsstellung verschwenkbar.**

Der Erfindung **liegt** die Aufgabe zugrunde, eine Vorrichtung anzugeben, bei der das Sperrelement bei seiner Bewegung von der Ent- in die Verriegelungsstellung in die an der Lenkwelle angeordneten Ausnehmungen eingreift, ohne daß eine zusätzliche Drehung des Lenkrades erforderlich ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, **als Sperrbolzen ein um eine zur Lenkwellenachse parallelen Drehachse schwenkbares Sperrelement vorzusehen, welches auch noch in seiner Verriegelungsstellung verschwenkbar angeordnet ist.** Dadurch wird erreicht, daß beim Auftreffen der Spitze des Sperrelementes auf die Flanke eines der Zähne des Zahnkranzes das Sperrelement seitlich verschwenkt wird und damit weiter in die durch die entsprechenden Zähne gebildete Ausnehmung verschoben werden kann, als dieses bei einem starren Sperrelement der Fall wäre, **ohne eine Drehung der Lenkspindel zu bewirken.**

Bei einer vorteilhaften Ausführungsform der Erfindung ist an dem zahnförmigen Sperrelement ein mit einer Spitze versehener federbeaufschlagter Stift (Finder) angeordnet, der die Spitze des Sperrelementes überragt und von dieser seitlich versetzt angeordnet ist. Durch diese Anordnung wird vermieden, daß bei der Verschiebung des Sperrelementes in seine Verriegelungsstellung die Spitzen des Sperrelementes und eines Zahnes aufeinandertreffen. Denn der Finder verschwenkt das Sperrelement gegen den Druck einer Zentrierfeder, bevor sich die beiden Spitzen berühren können.

Bei einer weiteren Ausführungsform der Erfindung wird statt Verwendung eines Finders die Drehachse des Sperrelementes derart angeordnet, daß sich bei der Verschiebung des Sperrelementes von der Ent- in die Verriegelungsstellung die Drehachse nicht radial, sondern versetzt auf die Lenkwellenachse zubewegt, so daß sich bei einem Aufeinandertreffen der Spitzen des Sperrelementes und eines Zahnes des Zahnkranzes ein Drehmoment ergibt, welches das Sperrelement seitlich verschwenkt.

Ferner hat es sich als vorteilhaft erwiesen, gehäusefeste Anschlagsflächen für das Sperrelement vorzusehen, die derart angeschrägt sind, daß auch bei gewaltsamer Verdrehung der Lenkwelle zwischen der entsprechenden Seitenfläche des Sperrelementes und der Anschlagsfläche nur Normalkräfte und keine Scherkräfte auftreten, wobei die Normalkräfte derart gerichtet sind, daß es zu keiner Verschiebung des Sperrelementes von der Ver- in die Entriegelungsstellung kommt.

Sofern ein Überlastschutz gegen gewaltsames Verdrehen der Lenkwelle vorgesehen werden soll, kann dieses in an sich bekannter Weise dadurch geschehen, daß der Zahnkranz auf der Lenkwelle verrutschbar angeordnet ist. Eine weitere Möglichkeit besteht darin, die gehäusefesten Anschlagsflächen derart anzuschrägen, daß sich bei gewaltsamer Verdrehung der Lenkwelle eine Kraftkomponente ergibt, die eine Verschiebung des Sperrelementes in seine Entriegelungsstellung bewirkt.

Weitere Einzelheiten und Vorteile der Erfindung ergeben sich aus den folgenden anhand von Figuren erläuterten Ausführungsbeispielen. Es zeigen:
- Fig.1: einen Querschnitt durch eine Lenkwelle mit daran angeordneter erfindungsgemäßer Verriegelungsvorrichtung, die ein in seiner Entriegelungsstellung befindliches Sperrelement mit Finder umfaßt;
- Fig.2: einen Ausschnitt aus Fig.1, wobei das Sperrelement zwischen seiner Ent- und seiner Verriegelungsstellung angeordnet ist;
- Fig.3: den Fig.2 entsprechenden Ausschnitt, wobei das Sperrelement sich in seiner Verriegelungsstellung befindet;
- Fig.4: einen Fig.3 entsprechenden Ausschnitt, wobei das Sperrelement von einem als Überlastschutz wirkenden seitlichen Anschlag begrenzt ist;
- Fig.5: eine perspektivische Ansicht des in seiner Verriegelungsstellung befindlichen Sperrelementes, wobei zur Verschiebung des Sperrelementes ein Elektromotor mit Getriebe vorgesehen ist, welches auf einen Nockenantrieb wirkt und
- Fig.6: einen Querschnitt durch eine Lenkwelle mit einem weiteren Ausführungsbeispiel einer daran angeordneten erfindungsgemäßen Verriegelungsvorrichtung.

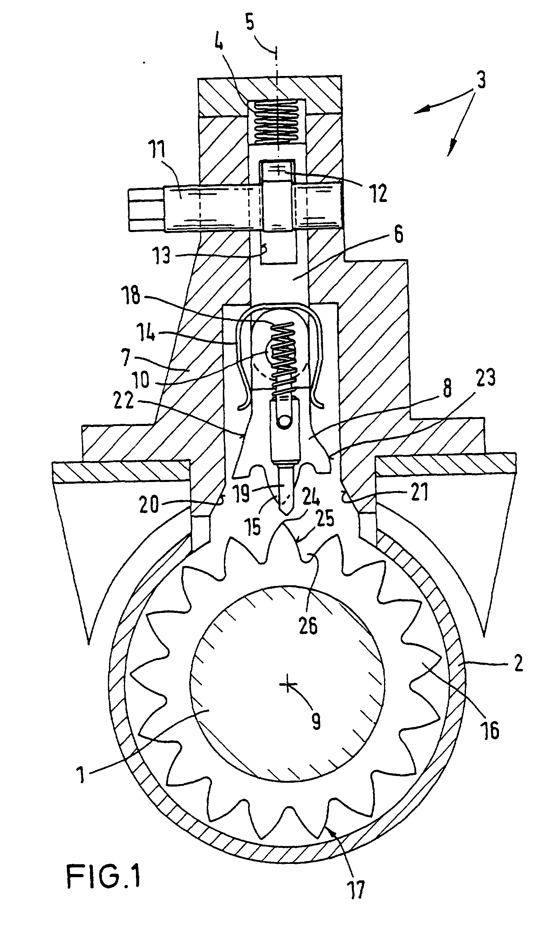

In den Fig.1-5 ist mit 1 die Lenkwelle einer Lenksäule, mit 2 das mit der Karosserie des entsprechenden Kraftfahrzeuges verbundene Mantelrohr der Lenksäule und mit 3 eine erfindungsgemäße Verriegelungsvorrichtung bezeichnet. Die Verriegelungsvorrichtung 3 umfaßt ein durch eine Druckfeder 4 beaufschlagtes und in Richtung seiner Längsachse 5 verschiebbares Schieberstück 6, welches von einem mit dem Mantelrohr 2 verbundenen Gehäuse 7 umschlossen ist.

An dem der Druckfeder 4 abgewandten Ende des Schieberstückes 6 ist ein Sperrelement 8 angeordnet, welches um eine zur Lenkwellenachse 9 parallele Drehachse 10 schwenkbar gelagert ist. Das Schieberstück 6 und damit auch das Sperrelement 8 werden durch einen an einer Nockenwelle 11 angeordneten Nokken 12, der in eine entsprechende Ausnehmung 13 des Schieberstückes 6 eingreift, in seiner Entriegelungsstellung gehalten. Außerdem wird das Sperrelement 8 mit Hilfe einer relativ weichen Zentrierfeder 14 in seiner Mittelstellung gehalten.

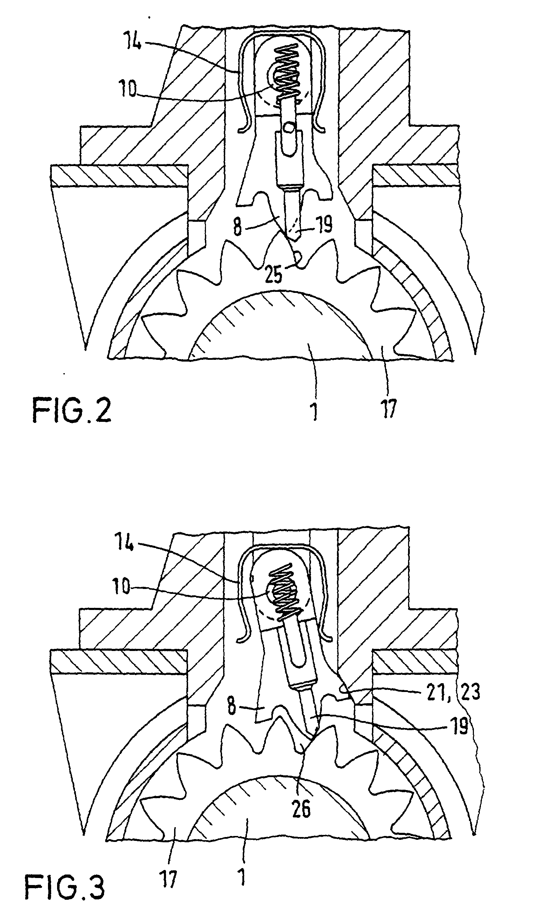

Das Sperrelement 8 besitzt mindestens eine zahnförmige Spitze 15, die in der Verriegelungsstellung des Sperrelementes 8 in die durch benachbarte Zähne 16 eines am äußeren Umfang der Lenkwelle 1 angeordneten Zahnkranzes 17 eingreift (vgl. auch Fig.3).

Außerdem ist an dem Sperrelement 8 ein in Richtung der Längsachse 5 des Schieberstückes 6 verschiebbarer und durch eine Druckfeder 18 beaufschlagter Stift (Finder) 19 angeordnet, der die Spitze 15 des Sperrelementes 8 überragt und von dieser seitlich versetzt angeordnet ist.

Seitlich von dem Sperrelement 8 sind dessen Schwenkbewegung begrenzende gehäusefeste Anschlagsflächen 20, 21 vorgesehen, die im Bereich der Verriegelungsstellung des Sperrelementes angeschrägt sind. Den gehäusefesten Anschlagsflächen sind entsprechende Seitenflächen 22, 23 des Sperrelementes 8 zugeordnet. Diese Seitenflächen 22, 23 weisen beide üblicherweise die gleiche Kontur auf, können aber auch, wie in den Fig.1-4 dargestellt, unterschiedliche Konturen besitzen. Auf die Funktion der Anschlags- und Seitenflächen wird weiter unten noch näher eingegangen.

Im folgenden wird die Wirkungsweise der erfindungsgemäßen Verriegelungsvorrichtung 3 erläutert. Dabei möge sich die Verriegelungsvorrichtung zunächst in der in Fig.1 dargestellten Entriegelungsstellung befinden.

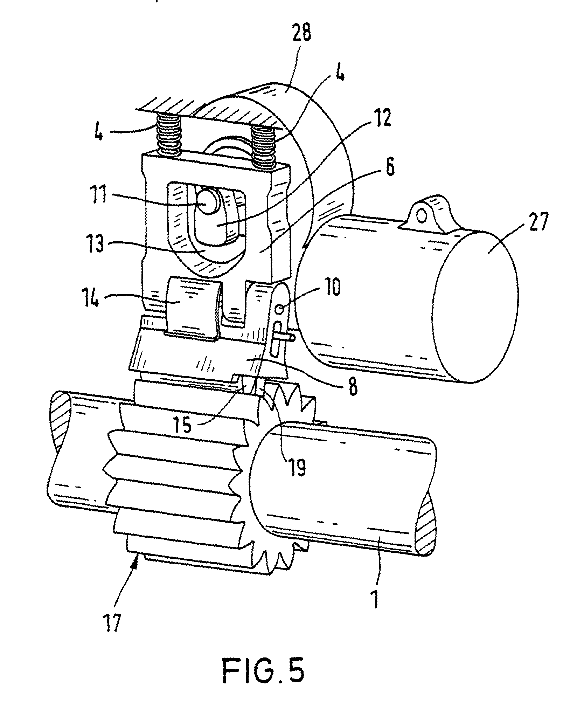

Wird der Befehl zum Verriegeln der Lenkwelle 1 ausgelöst, so wird die Nockenwelle 11 z.B. mittels eines Elektromotors mit Getriebe (in Fig.5 mit den Bezugszeichen 27 und 28 bezeichnet) oder durch Betätigung eines Schließzylinders in Drehung versetzt und der auf der Nockenwelle 11 befindliche Nocken 12 in die Ausnehmung 13 des Schieberstückes 6 gedreht. Das Schieberstück 6 wird durch die Druckfedern 4 in Richtung seiner Längsachse 5 zur Lenkwelle 1 hin verschoben.

Bei dem in Fig.1 dargestellten Fall bewegt sich die Spitze 15 des Sperrelementes 8 genau auf die Spitze 24 eines Zahnes 16 zu. Da der Finder 19 gegenüber der Spitze 15 und damit auch gegenüber der Zahnspitze 24 seitlich verschoben ist, drückt er gegen eine Zahnflanke 25 des Zahnes 16, bevor sich die Spitzen 15 und 24 berühren können und gleitet an der Zahnflanke 25 bei einer weiteren Verschiebung des Sperrelementes 8 entlang.

Dadurch wird das gesamte Sperrelement 8 um die Drehachse 10 (Fig.2) verschwenkt, bis sich der vordere Bereich des Sperrelementes 8 fast vollständig in der zwischen benachbarten Zähnen des Zahnkranzes gebildeten Ausnehmung 26 befindet (Fig.3). Der Finder 19 ist in dieser Stellung gegen den Druck der Feder 18 zurückgeschoben.

Bei einem Diebstahlversuch wird das auf die Lenkwelle 1 wirkende Drehmoment über den Zahnkranz 17 an das Sperrelement 8 weitergeleitet, welches über die Seitenfläche 23 gegen die angeschrägte Anschlagsfläche 21 drückt. Dabei sind die Anschlagsflächen 20, 21 derart angeschrägt, daß das Drehmoment der Lenkwelle 1 in Form einer Normalkraft an das Gehäuse 7 weitergeleitet wird, so daß auf das Sperrelement 8 nur Druckkräfte und keine Biegekräfte wirken. Bei einer Drehung der Lenkwelle in die entgegengesetzte Richtung wird das Sperrelement 8 um einen relativ kleinen Winkel verschwenkt und drückt dann mit seiner Seitenfläche 22 gegen die gehäusefeste Anschlagsfläche 20.

Bei Verwendung der erfindungsgemäßen Verriegelungsvorrichtung ist daher gewährleistet, daß das Sperrelement 8 immer, auch in einer ungünstigen Stellung der Lenksäule, ohne Verdrehung des Lenkrades und damit der Lenkwelle 1, die Lenksäule sperrt. Das bei bekannten Verriegelungsvorrichtungen übliche Drehen an der Lenksäule nach Schlüsselabzug, um sich zu vergewissern, daß die Lenkung gesperrt ist, kann bei der erfindungsgemäßen Verriegelungsvorrichtung entfallen.

Die Erfindung ist selbstverständlich nicht auf das vorstehend beschriebene Ausführungsbeispiel beschränkt. So kann beispielsweise das Sperrelement statt nur einen Zahn auch mehrere zahnförmige Spitzen (Zahnradsegment) aufweisen.

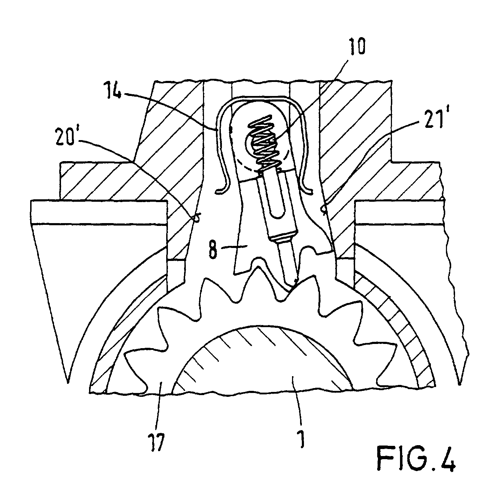

Außerdem können die gehäusefesten Anschlagsflächen derart angeschrägt sein, daß die bei einer gewaltsamen Verdrehung der Lenkwelle 1 von der entsprechenden Seitenfläche des Sperrelementes auf die Anschlagsflächen ausgeübte Kraft zu einer Verschiebung des Sperrelementes 8 in seine Entriegelungsstellung führt. Ein entsprechendes Ausführungsbeispiel ist in Fig.4 dargestellt. Dabei sind die gehäusefesten Anschlagsflächen mit 20' und 21' bezeichnet.

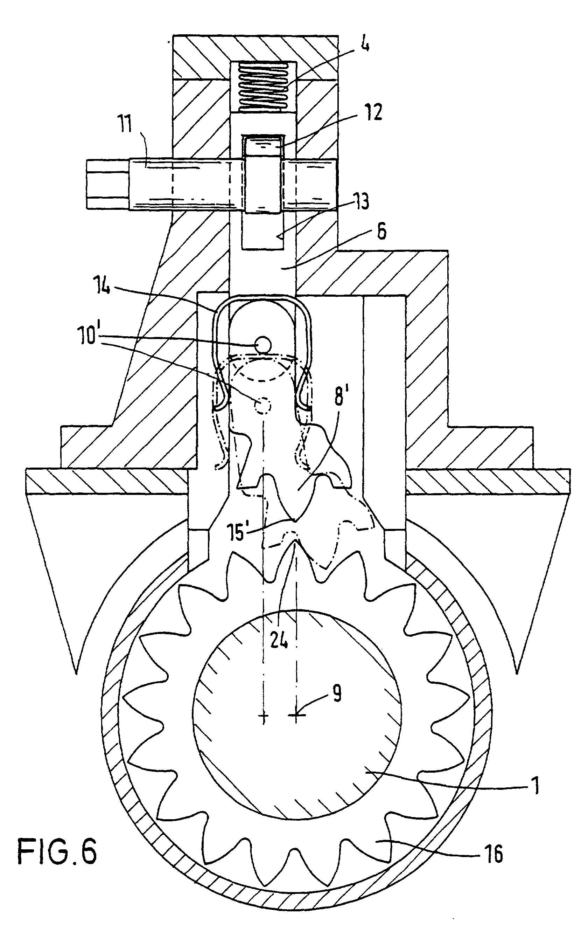

Bei dem in Fig.6 dargestellten Ausführungsbeispiel wird auf einen an dem Sperrelement angeordneten Finder verzichtet. Um auch in diesem Fall sicherzustellen, daß das Sperrelement ohne zusätzliche Drehung der Lenkwelle sicher in die Verzahnung des Zahnkranzes eingreift, ist die Drehachse 10' des mit 8' bezeichneten Sperrelementes derart angeordnet, daß sich bei der Verschiebung des Sperrelementes von der Entriegelungsstellung (durchgezogene Linie) in die Verriegelungsstellung (gestrichelte Darstellung des Sperrelementes) die Drehachse 10' nicht radial, sondern versetzt auf die Lenkwellenachse 9 zubewegt, so daß sich bei einem Aufeinandertreffen der Spitze 15' des Sperrelementes 8' und der Spitze 24 eines Zahnes 16 des Zahnkranzes 17 ein Drehmoment ergibt, welches das Sperrelement 8' seitlich verschwenkt.

### Bezugszeichenliste

- 1: Lenkwelle
- 2: Mantelrohr
- 3: Verriegelungsvorrichtung
- 4: Druckfeder
- 5: Längsachse
- 6: Schieberstück
- 7: Gehäuse
- 8,8': Sperrelement
- 9: Lenkwellenachse
- 10,10': Drehachse
- 11: Nockenwelle
- 12: Nocken
- 13: Ausnehmung
- 14: Zentrierfeder
- 15,15': zahnförmige Spitze (Sperrelement)
- 16: Zahn (Zahnkranz)
- 17: Zahnkranz
- 18: Druckfeder
- 19: Stift, Finder
- 20,20': Anschlagsfläche
- 21,21': Anschlagsfläche
- 22,23: Seitenflächen (Sperrelement)
- 24: Spitze (Zahn)
- 25: Zahnflanke
- 26: Ausnehmung
- 27: Elektromotor
- 28: Getriebe

## Patentansprüche

1. Verriegelungsvorrichtung für ein Kraftfahrzeug mit mindestens einem zur Lenkwelle (1) des Fahrzeuges innerhalb eines Gehäuses (7) von einer Ent- in eine Verriegelungsstellung hin verschiebbar angeordneten **und mit einer Spitze (15, 15') versehenen,** zahnförmig ausgebildeten Sperrelement (8;8'), welches in seiner Verriegelungsstellung in die durch benachbarte Zähne (16) gebildete Ausnehmung (26) eines am äußeren Umfang der Lenkwelle (1) angeordneten Zahnkranzes (17) eingreift, dadurch gekennzeichet:
a) daß das Sperrelement (8;8') in seiner Verriegelungsstellung innerhalb eines vorgegebenen Winkelbereiches um eine zur Lenkwellenachse (9) parallele Drehachse (10;10') schwenkbar angeordnet ist,
b) daß das Sperrelement (8;8') durch eine Zentrierfeder (14) in einer Ausgangslage gehalten wird, wobei die Federkonstante der Zentrierfeder (14) derart gewählt ist, daß bei der Verschiebung des Sperrelementes (8;8') in seine Verriegelungsstellung das Sperrelement (8;8') beim Auftreffen auf eine Zahnflanke (25) eines Zahnes (16) des Zahnkranzes (17) verschwenkt und in die Ausnehmung (26) zwischen den entsprechenden benachbarten Zähnen (16) gedrückt wird, ohne daß es zu einer nennenswerten Verdrehung der Lenkwelle (1) kommt und
c) daß seitlich von dem Sperrelement (8;8') dessen Schwenkbewegung begrenzende gehäusefeste Anschlagsflächen (20,21;20',21') vorgesehen sind.

2. Verriegelungsvorrichtung nach Anspruch 1, **dadurch gekennzeichnet, daß** an dem zahnförmigen Sperrelement (8) ein mit einer Spitze versehener federbeaufschlagter Stift (Finder) (19) angeordnet ist, der die Spitze (15) des Sperrelementes (8) überragt und von dieser seitlich versetzt angeordnet ist, derart, daß im Falle der Verschiebung der Spitze (15) des Sperrelementes (8) in Richtung auf die Spitze (24) eines Zahnes (16) des Zahnkranzes (17) der Finder (19) das Sperrelement (8) gegen den Druck der Zentrierfeder (14) seitlich verschwenkt, bevor die beiden Spitzen (15,24) sich berühren können.

3. Verriegelungsvorrichtung nach Anspruch 1, **dadurch gekennzeichnet, daß** die Drehachse (10') des Sperrelementes (8') derart angeordnet ist, daß sich bei der Verschiebung des Sperrelementes (8') von der Ent- in die Verriegelungsstellung die Drehachse (10') nicht radial, sondern versetzt auf die Lenkwellenachse (9) zubewegt, so daß sich bei einem Aufeinandertreffen der Spitze (15') des Sperrelementes (8') und der Spitze (24) eines Zahnes (16) des Zahnkranzes (17) ein Drehmoment ergibt, welches das Sperrelement (8') seitlich verschwenkt.

4. Verriegelungsvorrichtung nach einem der Ansprüche 1 bis 3, **dadurch gekennzeichnet, daß** die gehäusefesten Anschlagsflächen (20,21) derart angeschrägt sind, daß es sich bei den bei gewaltsamer Verdrehung der Lenkwelle (1) von der entsprechenden Seitenfläche (22,23) des Sperrelementes (8) auf die Anschlagsfläche (20,21) auftretenden Kräften um Normalkräfte handelt, die derart gerichtet sind, daß es zu keiner Verschiebung des Sperrelementes (8) in seine Entriegelungsstellung kommt.

5. Verriegelungsvorrichtung nach einem der Ansprüche 1 bis 3, **dadurch gekennzeichnet, daß** die gehäusefesten Anschlagsflächen (20',21') derart angeschrägt sind, daß die bei einer gewaltsamen Verdrehung der Lenkwelle (1) von der entsprechenden Seitenfläche (22,23) des Sperrelementes (8) auf die Anschlagsfläche (20',21') ausgeübte Kraft zu einer Verschiebung des Sperrelementes (8) in seine Entriegelungsstellung führt.

6. Verriegelungsvorrichtung nach einem der Ansprüche 1 bis 5, **dadurch gekennzeichnet, daß** das Sperrelement (8;8') schwenkbar an einem Schieberstück (6) befestigt ist, der an seinem dem Sperrelement (8;8') abgewandten Ende von einer sich an dem Gehäuse (7) abstützenden Druckfeder (4) beaufschlagt ist und daß das Schieberstück (6) mit dem Nocken (12) einer Nockenwelle (11) in Eingriff steht, derart, daß eine Drehung der Welle (11) eine entsprechende Verschiebung des Schieberstückes (6) bewirkt.

7. Verriegelungsvorrichtung nach Anspruch 6, **dadurch gekennzeichnet, daß** die Nockenwelle (11) mit einem Schließzylinder oder einem Elektromotor (27) mit Getriebe (28) verbunden ist.

## Claims

1. Locking device for a motor vehicle with at least one tooth-shaped blocking element (8; 8') which is disposed such that it can be displaced towards the steering shaft (1) of the vehicle within a housing (7) from an unlocking into a locking position, is provided with a tip (15, 15') and engages in its locking position in the recess (26), formed by adjacent teeth (16), of a toothed ring (17) disposed at the outer circumference of the steering shaft (1), **characterised in**
a) that the blocking element (8; 8') is disposed in its locking position such that it can pivot about a fulcrum (10; 10'), which is parallel to the steering shaft axis (9), within a predetermined angular range,
b) that the blocking element (8; 8') is retained by a centring spring (14) in an initial position, wherein the spring constant of the centring spring (14) is selected such that, when the blocking element (8; 8') is displaced into its locking position, the blocking element (8; 8') is pivoted upon striking a tooth flank (25) of a tooth (16) of the toothed ring (17) and is pushed into the recess (26) between the corresponding adjacent teeth (16) without the steering shaft (1) rotating to an appreciable degree, and
c) that stop faces (20, 21; 20', 21') are provided to the sides of the blocking element (8; 8'), which faces are fixed to the housing and limit the pivotal movement of the blocking element.

2. Locking device according to Claim 1, **characterised in that** a spring-loaded pin (finder) (19) is disposed at the tooth-shaped blocking element (8), which pin is provided with a tip, projects beyond the tip (15) of the blocking element (8) and is staggered to the side of this tip (15) such that, if the tip (15) of the blocking element (8) is displaced in the direction of the tip (24) of a tooth (16) of the toothed ring (17), the finder (19) pivots the blocking element (8) laterally against the pressure of the centring spring (14) before the two tips (15, 24) can contact one another.

3. Locking device according to Claim 1, **characterised in that** the fulcrum (10') of the blocking element (8') is disposed such that, when the blocking element (8') is displaced from the unlocking into the locking position, the fulcrum (10') moves up to the steering shaft axis (9) in staggered fashion rather than radially, so that a torque which pivots the blocking element (8') laterally is produced when the tip (15') of the blocking element (8') and the tip (24) of a tooth (16) of the toothed ring (17) meet.

4. Locking device according to any one of Claims 1 to 3, **characterised in that** the stop faces (20, 21), which are fixed to the housing, are bevelled such that the forces which are exerted by the corresponding side face (22, 23) of the blocking element (8) on the stop face (20, 21) upon forcefully rotating the steering shaft (1) are normal forces which are directed such that the blocking element (8) is not displaced into its unlocking position.

5. Locking device according to any one of Claims 1 to 3, **characterised in that** the stop faces (20', 21'), which are fixed to the housing, are bevelled such that the force which is exerted by the corresponding side face (22, 23) of the blocking element (8) on the stop face (20', 21') upon forcefully rotating the steering shaft (1) results in the blocking element (8) being displaced into its unlocking position.

6. Locking device according to any one of Claims 1 to 5, **characterised in that** the blocking element (8; 8') is pivotably fastened to a slide piece (6) which is subjected to the action of a compression spring (4), which is supported at the housing (7), at its end which is remote from the blocking element (8; 8'), and that the slide piece (6) is engaged with the cam (12) of a camshaft (11) such that a rotation of the shaft (11) results in a corresponding displacement of the slide piece (6).

7. Locking device according to Claim 6, **characterised in that** the camshaft (11) is connected to a closing cylinder or an electric motor (27) with gear unit (28).

## Revendications

1. Dispositif de verrouillage pour un véhicule automobile comprenant au moins un élément de blocage (8 ; 8') en forme de dent, disposé de manière déplaçable par rapport à l'arbre de direction (1) du véhicule à l'intérieur d'un boîtier (7) d'une position de déverrouillage dans une position de verrouillage, et pourvu d'une pointe (15, 15'), lequel vient en prise, dans sa position de verrouillage, dans l'évidement (26), formé par des dents voisines (16), d'une couronne dentée (17) disposée sur la périphérie extérieure de l'arbre de direction (1), **caractérisé en ce que**
a) l'élément de blocage (8 ; 8') est disposé de manière à pouvoir pivoter dans sa position de verrouillage à l'intérieur d'une région angulaire prédéfinie autour d'un axe de rotation (10 ; 10') parallèle à l'axe de l'arbre de direction (9),
b) l'élément de blocage (8 ; 8') est maintenu par un ressort de centrage (14) dans une position de départ, la constante de rappel du ressort de centrage (14) étant choisie de telle sorte que lors du déplacement de l'élément de blocage (8 ; 8') dans sa position de verrouillage, l'élément de blocage (8 ; 8') pivote lors du contact avec un flanc de dent (25) d'une dent (16) de la couronne dentée (17) et est pressé dans l'évidement (26) entre les dents voisines correspondantes (16), sans qu'il ne se produise de rotation notoire de l'arbre de rotation (1) et
c) des faces de butées (20, 21 ; 20', 21') fixe par rapport au boîtier sont prévues latéralement à l'élément de blocage (8 ; 8') et limitent son mouvement de pivotement.

2. Dispositif de verrouillage selon la revendication 1, **caractérisé en ce qu'**une broche (senseur) (19) sollicitée par un ressort et pourvue d'une pointe est disposée sur l'élément de blocage (8) en forme de dent, laquelle dépasse la pointe (15) de l'élément de blocage (8) et est disposée de manière décalée latéralement par rapport à celle-ci de telle sorte que dans le cas du déplacement de la pointe (15) de l'élément de blocage (8) dans la direction de la pointe (24) d'une dent (16) de la couronne dentée (17), le senseur (19) fasse pivoter l'élément de blocage (8) latéralement à l'encontre de la pression du ressort de centrage (14) avant que les deux pointes (15, 24) ne puissent venir en contact.

3. Dispositif de verrouillage selon la revendication 1, **caractérisé en ce que** l'axe de rotation (10') de l'élément de blocage (8') est disposé de telle sorte que lors du déplacement de l'élément de blocage (8') de la position de déverrouillage dans la position de verrouillage, l'axe de rotation (10') ne se déplace pas radialement mais de manière décalée vers l'axe de l'arbre de direction (9), de sorte que lorsque la pointe (15') de l'élément de blocage (8') et la pointe (24) d'une dent (16) de la couronne dentée (17) viennent en contact, il se produise un couple de rotation qui fait pivoter latéralement l'élément de blocage (8').

4. Dispositif de verrouillage selon l'une quelconque des revendications 1 à 3, **caractérisé en ce que** les faces de butée (20, 21) fixes par rapport au boîtier sont biseautées de telle sorte que dans le cas d'une rotation violente de l'arbre de direction (1), les forces appliquées par la face latérale correspondante (22, 23) de l'élément de blocage (8) sur la face de butée (20, 21) soient des forces normales qui sont orientées de telle sorte qu'il ne se produise aucun déplacement de l'élément de blocage (8) dans la position de déverrouillage.

5. Dispositif de verrouillage selon l'une quelconque des revendications 1 à 3, **caractérisé en ce que** les faces de butées (20', 21') fixes par rapport au boîtier sont biseautées de telle sorte que dans le cas d'une rotation violente de l'arbre de direction (1), la force appliquée par la face latérale correspondante (22, 23) de l'élément de blocage (8) sur la face de butée (20', 21') conduise à un déplacement de l'élément de blocage (8) dans sa position de déverrouillage.

6. Dispositif de verrouillage selon l'une quelconque des revendications 1 à 5, **caractérisé en ce que** l'élément de blocage (8 ; 8') est fixé sur un coulisseau (6) de manière à pouvoir pivoter, lequel est sollicité à son extrémité opposée à l'élément de blocage (8 ; 8') par un ressort de pression s'appuyant sur le boîtier (7), et **en ce que** le coulisseau (6) est en prise avec la came (12) d'un arbre à cames (11) de telle sorte qu'une rotation de l'arbre (11) provoque un déplacement correspondant du coulisseau (6).

7. Dispositif de verrouillage selon la revendication 6, **caractérisé en ce que** l'arbre à cames (11) est connecté à un cylindre de verrouillage ou à un moteur électrique (27) avec un engrenage (28).
